(19) Europäisches Patentamt
European Patent Office
Office européen des brevets

(11) Veröffentlichungsnummer: **0 462 453 B1**

# (12) EUROPÄISCHE PATENTSCHRIFT

(45) Veröffentlichungstag der Patentschrift: **26.04.95**

(51) Int. Cl.$^{6}$: **C09B 67/00**

(21) Anmeldenummer: **91109246.8**

(22) Anmeldetag: **06.06.91**

## (54) Reaktivfarbstoffpräparationen.

(30) Priorität: **19.06.90 DE 4019422**

(43) Veröffentlichungstag der Anmeldung:
**27.12.91 Patentblatt 91/52**

(45) Bekanntmachung des Hinweises auf die Patenterteilung:
**26.04.95 Patentblatt 95/17**

(84) Benannte Vertragsstaaten:
**CH DE FR GB LI**

(56) Entgegenhaltungen:
**DE-C- 572 693**
**GB-A- 906 807**

(73) Patentinhaber: **BAYER AG**
**D-51368 Leverkusen (DE)**

(72) Erfinder: **Michna, Martin, Dr.**
**Ostring 39**
**W-5024 Pulheim (DE)**
Erfinder: **Hoppe, Manfred, Dr.**
**Kölner Strasse 233**
**W-5067 Kürten 2 (DE)**
Erfinder: **Herd, Karl-Josef, Dr.**
**Am Gartenfeld 66**
**W-5068 Odenthal (DE)**
Erfinder: **Henk, Hermann, Dr.**
**Roggendorfstrasse 55**
**W-5000 Köln 80 (DE)**
Erfinder: **Stohr, Frank-Michael, Dr.**
**Am Thelen Siefen 10**
**W-5068 Odenthal (DE)**

EP 0 462 453 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Präparationen wasserlöslicher Reaktivfarbstoffe, dadurch gekennzeichnet daß sie Pyridinderivate der Formel

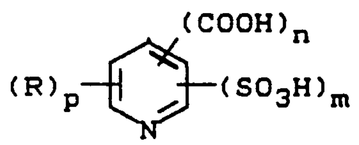

(I)

worin

n, m = 0, 1 oder 2 und n + m = 1-3

p = 0 oder 1

R = $C_1$-$C_4$-Alkyl

oder deren Salze, insbesondere die Alkalisalze (Li, Na, K) enthalten.

Die Alkylreste R können gegebenenfalls substituiert sein.

Bevorzugte Verbindungen (I) sind:

Nicotinsäure, iso-Nicotinsäure, Pyridin-3-sulfonsäure, Pyridin-2,3-dicarbonsäure, Pyridin-2,5-dicarbonsäure, 2-Carboxy-5-Methylpyridin, 4-Methylpyridin-3-sulfonsäure.

Die Präparationen können fest oder flüssig sein. Sie enthalten im allgemeinen 0,01-20 Gew.-%, vorzugsweise 0,5-10 Gew.-% Verbindungen (I).

Die festen Präparationen liegen beispielsweise in Pulver- oder Granulatform vor und enthalten im allgemeinen:

10 -95, vorzugsweise 20-80 Gew.-% Farbstoff

0,01-20, vorzugsweise 0,5-10,0 Gew.-% (I)

0 -90, vorzugsweise 10 bis 50 Gew.-% übliche Einstellmittel.

Geeignete Einstellmittel sind beispielsweise anorganische Salze wie NaCl, $Na_2SO_4$, $(NH_4)_2SO_4$, Polyphosphate, wasserlösliche organische Stoffe wie z.B. Kondensationsprodukte aus Naphthalinsulfonsäuren und Formaldehyd sowie Dextrin.

Weiterhin enthalten die Präparationen vorzugweise Puffersubstanzen, insbesondere solche zur Einstellung von pH-Werten von etwa 4 bis 8, wie Alkaliphosphate, -hydrogenphosphat, -Dihydrogenphosphate oder Alkaliborate, sowie übliche Entstaubungsmittel wie Öle, Phthalsäureester, weiterhin nichtionogene Dispergiermittel.

Zur Herstellung der erfindungsgemäßen festen Farbstoffpräparationen werden vorzugsweise Farbstoffe und (I) trocken gemischt und gemahlen oder die gemahlenen Komponenten gemischt. Die Mahlung kann z.B. in einem Mischer, einer Kugelmühle, Stiftscheibenmühle, Hammermühle oder in einer Luftstrahlmühle erfolgen.

Eine andere Möglichkeit der Herstellung besteht darin, daß man eine wäßrige Lösung von Farbstoff und (I) trocknet und anschließend gegebenenfalls zu einem Pulver mahlt. (I) kann gegebenenfalls auch in einer beliebigen Stufe bei der Herstellung der Farbstoffe zugesetzt werden.

Die flüssige Präparationen können neben Wasser noch wassermischbare Lösungsmittel bzw. Lösevermittler enthalten.

Beispielhaft seien genannt: offenkettige oder cyclische Amide wie $\epsilon$-Caprolactam, Dimethylformamid, Dimethylharnstoff, Harnstoff, Dicyandiamid. Lactame oder Lactone wie N-Methylpyrrolidon, $\gamma$-Butyrolacton weiterhin Sulfone, Sulfoxide, ein- und mehrwertige Alkohole, deren Ether und Ester mit aliphatischen Carbonsäuren.

Die flüssigen Präparationen enthalten im allgemeinen:

10-30 Gew.-% Farbstoff

0,1-10 Gew.-% (I)

0-60 Gew.-% wassermischbares Lösungsmittel

0,1 - 5 Gew.-% Puffer

20 - 90 Gew.-% Wasser.

Unter Reaktivfarbstoffe werden solche Farbstoffe verstanden, die mindestens eine faserreaktive Gruppe enthalten welche unter Färbebedingungen, gegebenenfalls in Gegenwart säurebindender Mittel, mit den Hydroxylgruppen der Cellulose bzw. der NH-Gruppen natürlicher oder synthetischer Polyamidfasern unter Ausbildung kovalenter Bindungen zu reagieren vermögen.

Geeignete Farbstoffe sind beispielsweise solche, die mindestens einen reaktiven Substituenten an einen 5- oder 6-gliedrigen heterocyclischen Ring gebunden enthalten, wie an einen Monoazin-, Diazin-, Triazin-, z.B. Pyridin-, Pyrimidin, Pyridazin-, Pyrazin, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:
Halogen (Cl, Br oder F), Ammonium, einschießlich Hydrazinium, Sulfonium, Sulfonyl, Azido-($N_3$), Rhodanido, Thio, Thiolether, Oxyether, Sulfinsäure und Sulfonsäure.

Bevorzugt sind Farbstoffe mit mindestens einem Mono- oder Dihalogen-sym.-triazinylrest, Mono-, Di- oder Trihalogenpyrimidinylrest oder Rest $-SO_2CH_2CH_2X$ mit X = anionisch abspaltbarer Rest, insbesondere -Cl oder $-OSO_3H$.

Besonders bevorzugt sind Farbstoffe mit mindestens einem Reaktivrest

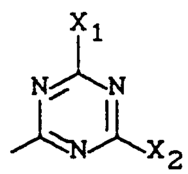

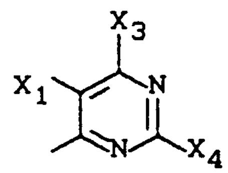

$-SO_2-CH_2-CH_2-OSO_3H$

mit

$X_1$ = Cl, F
$X_2$ = Cl, F, $NH_2$, NHR', OR', $CH_2R'$, SR', NR'R''
$X_3$ = Cl, F, $CH_3$
$X_4$ = Cl, F, H

und

worin R' und R'' unabhängig voneinander Wasserstoff, $C_{1-4}$-Alkyl, das gegebenenfalls substituiert ist insbesondere durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $CH=CH_2$ oder $-CH_2CH_2-V$ mit V = alkalisch eliminierbarer Rest); Phenyl, das gegebenenfalls substituiert ist, insbesondere durch Halogen, Nitro, Cyan, Trifluormethyl, Sulfamoyl, Carbamoyl, $C_{1-4}$-Alkyl, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist,
oder worin R' und R'' zusammen mit dem Aminostickstoffatom einen Morpholino-, Piperidino- oder Piperazinorest bilden.

Farbstoffe, welche die obengenannten Reaktivgruppensysteme enthalten sind beispielsweise aus folgenden Publikationen bekannt:
US-PS 3 377 336, US-PS 3 527 760, GB-PS 1 169 254, US-PS 3 669 951, DE-PS 1 644 208, GB-PS 1 188 606, DE-OS 2 817 780, ES-PS 479 771.

Die Farbstoffe können eine oder mehrere gleiche oder verschiedene Reaktivgruppen aufweisen.

Bei den Farbstoffen handelt es sich vorzugsweise um gegebenenfalls metallhaltigen Mono- oder Polyazo-, Anthrachinon-, Phthalocyanin-, Nitro-, Di- und Triphenylmethan-, Oxazin-, Dioxazin-, Thiazin-, Xanthen- oder Formazanverbindungen, die vorzugsweise 1-6 Sulfo- oder Carboxygruppen enthalten.

Die Farbstoffe liegen im allemeinen in Form ihrer Alkalisalze (Li, Na, K) oder Ammoniumsalze vor ($NH_4^{\oplus}$) oder

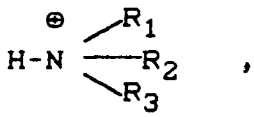

wobei
die Substituenten $R_1$ - $R_3$ unabhängig voneinander für $C_1$-$C_4$-Alkyl oder

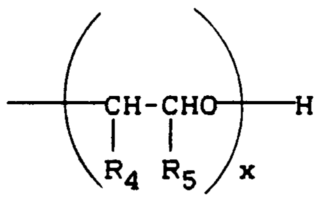

mit
$R_4$, $R_5$ unabhängig voneinander = H oder $CH_3$ und x = 1-4 stehen).

Die Präparationen eignen sich hervorragend zum Färben und Bedrucken von Hydroxylgruppen- und Amidgruppen-haltigen Materialien, insbesondere Cellulose.

Beispiel 1

10 kg Farbstoff der Formel

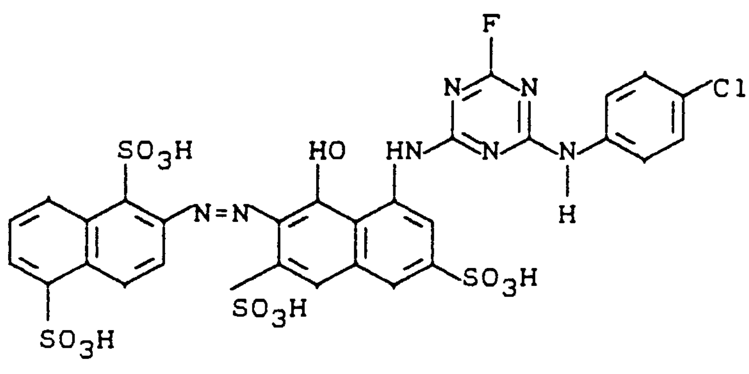

(Na-Salz, trocken)
werden mit 4,1 kg eines Kondensationsprodukts aus Naphthalinsulfonsäure und Formaldehyd gemischt. Dazu gibt man 100 g Dinatriumhydrogenphosphat, 50 g Natriumdihydrogenphosphat, 100 g Paraffinöl und 1,3 kg Nicotinsäure. Das Gemisch wird in einer Mühle innig vermischt. Das so erhaltene Farbstoffpulver eignet sich hervorragend zum Färben von textilen Substraten aus Baumwolle.

Beispiel 2

30 kg einer Suspension des Farbstoffs der Formel

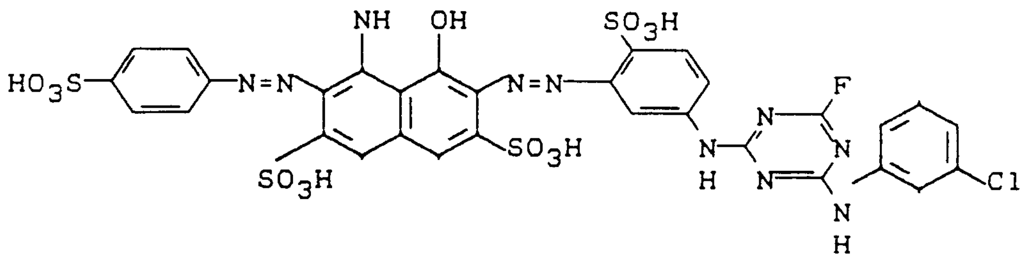

(Na-Salz, 25 % Farbstoffgehalt) werden mit 3,7 kg Natriumsulfat versetzt. Man setzt außerdem 150 g Natriumtripolyphosphat, 100 g Mineralöl und 1,1 kg des Natriumsalzes der Nicotinsäure zu, Die Suspension wird auf einem Sprühtrockner in 12,6 kg Farbstoffpulver mit einer Restfeuchte von 3 % überführt, Das Farbstoffpulver eignet sich hervorragend zum Färben von textilen Substraten aus Baumwolle.

Beispiel 3

30 kg einer Lösung des Farbstoffs der Formel

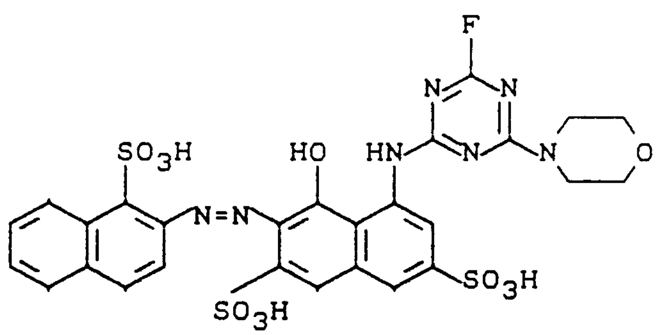

(Li/Na-Salz; Li/Na-Verhältnis ca. 1:1) mit einem Farbstoffgehalt von 30 % werden mit 600 g Dicyandiamid, 3 kg ε-Caprolactam, 150 g Borsäure und 1,5 kg Nicotinsäure versetzt. Der pH wird mit wenig LiOH auf 7,7 gestellt. Man setzt 850 g entionisiertes Wasser zur Einstellung auf die gewünschte Stärke zu und erhält eine Farbstofflösung, die sich hervorragend eignet für alle Verfahren zum Färben von textilen Substraten aus Baumwolle.

Ersetzt man in den Beispielen 1-3 die dort angegebenen Farbstoffe durch die folgenden Farbstoffe erhält man ebenfalls hervorragende Präparationen:

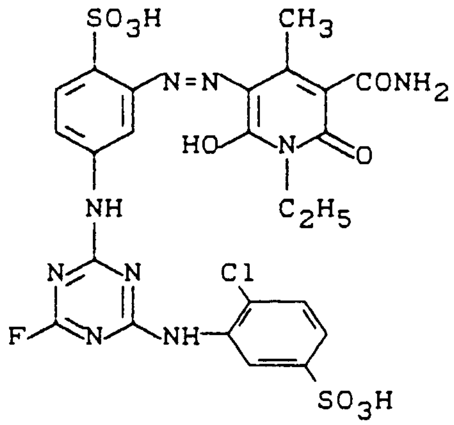

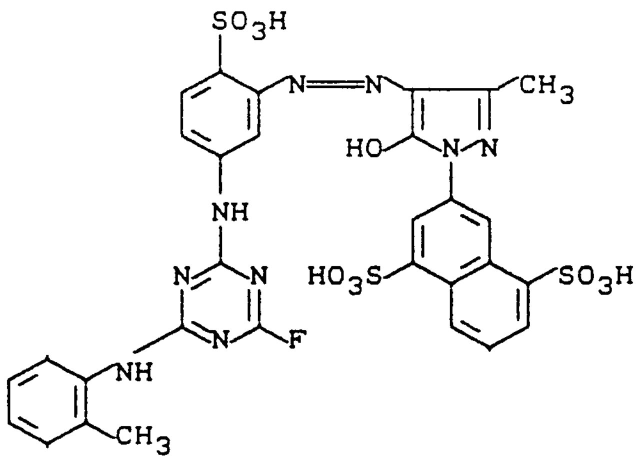

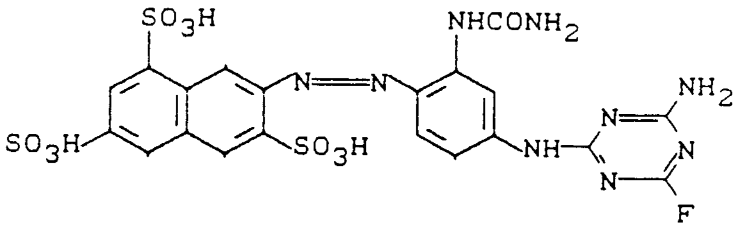

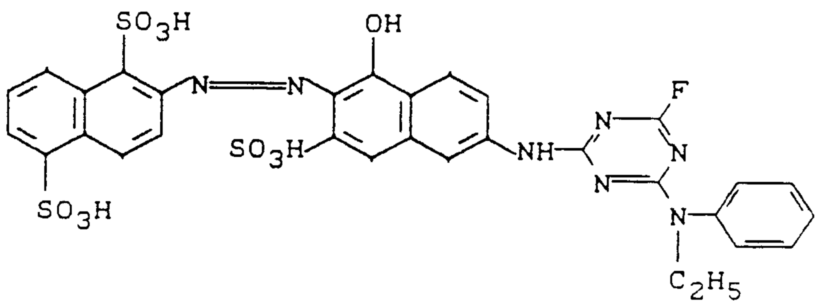

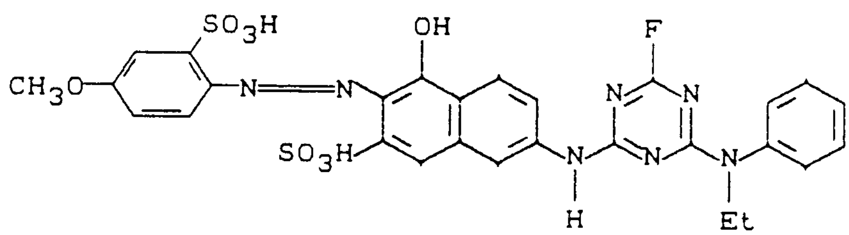

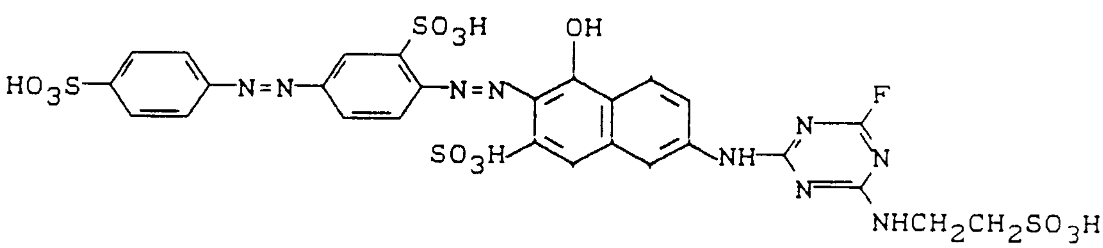

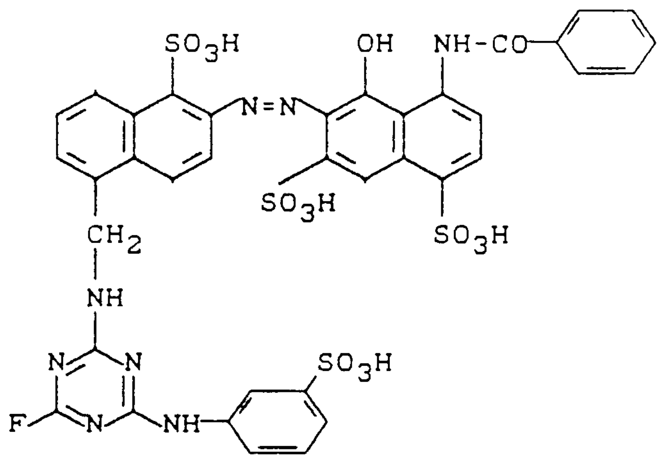

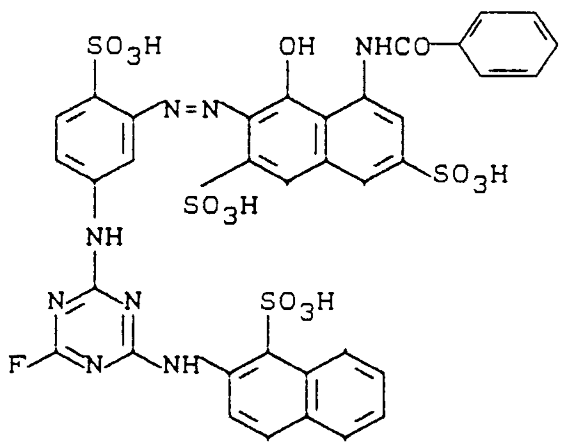

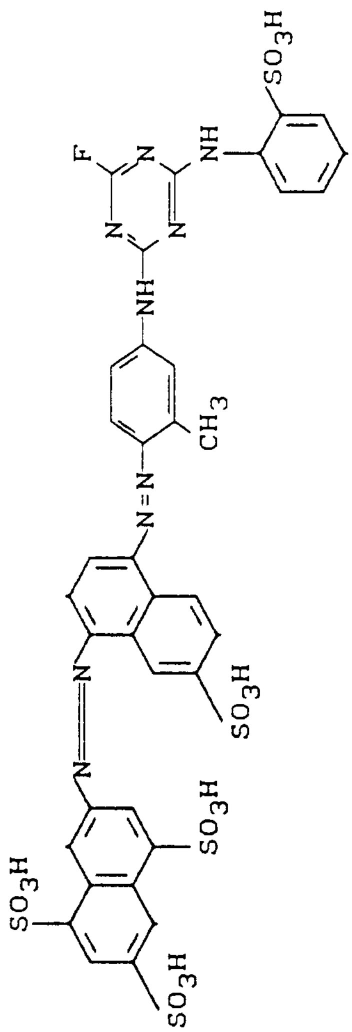

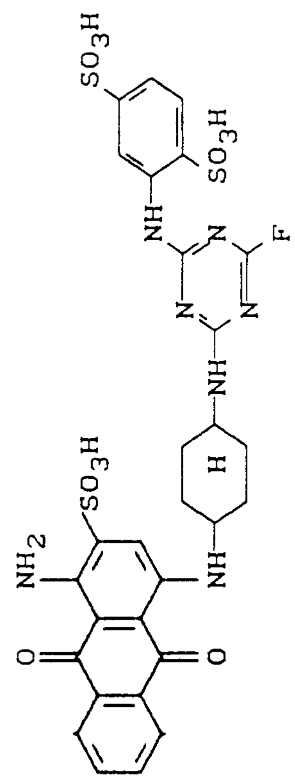

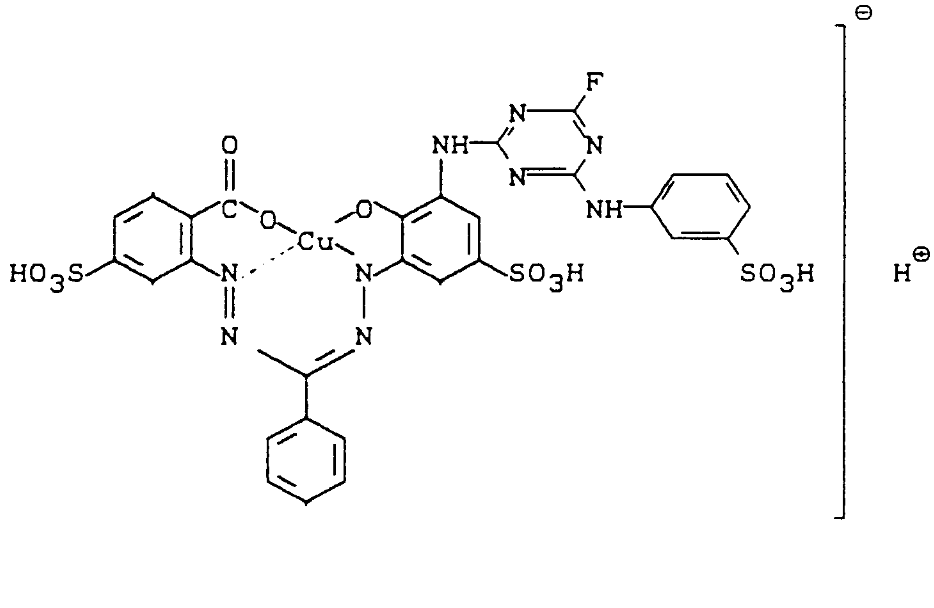

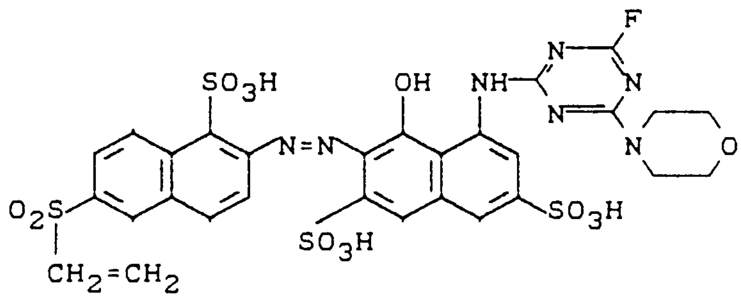

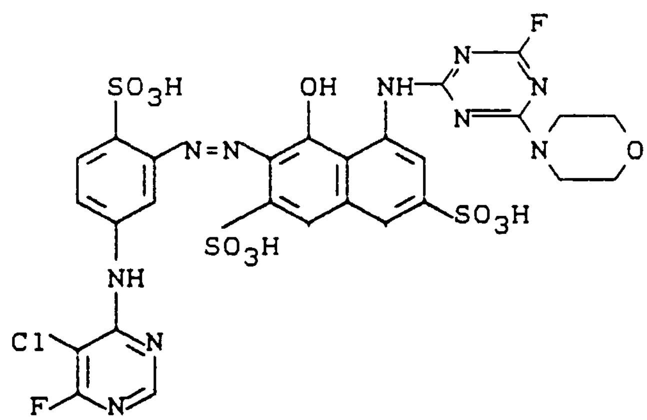

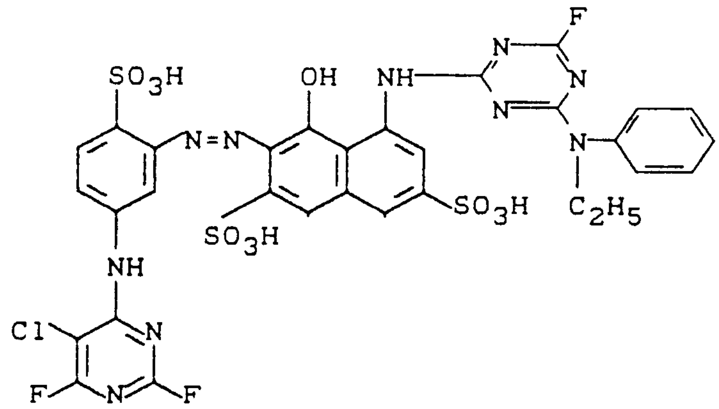

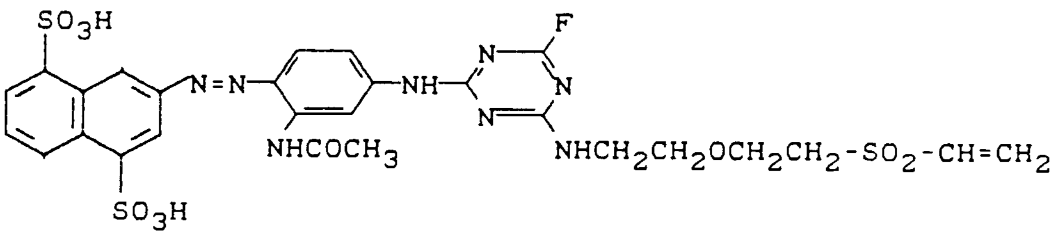

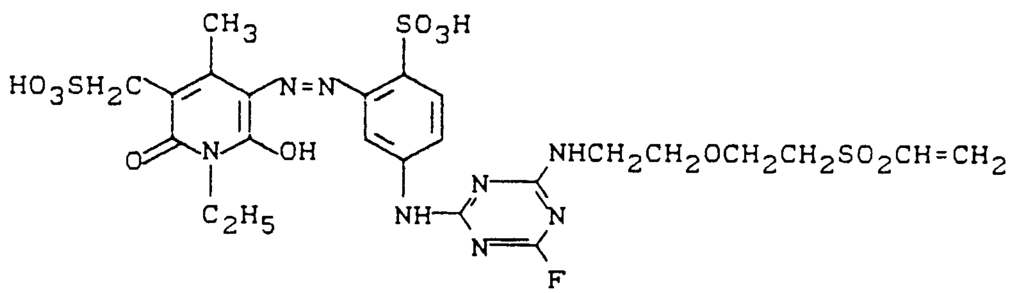

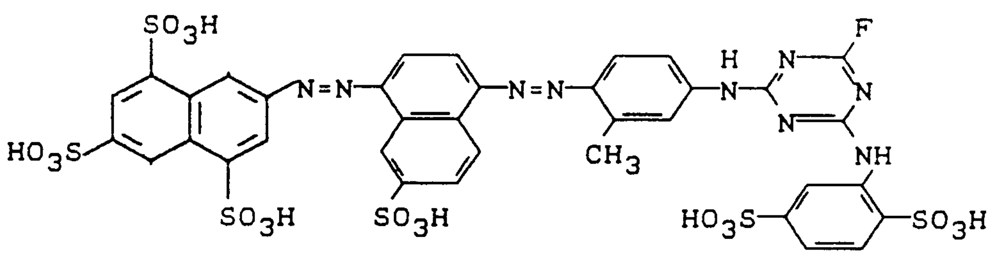

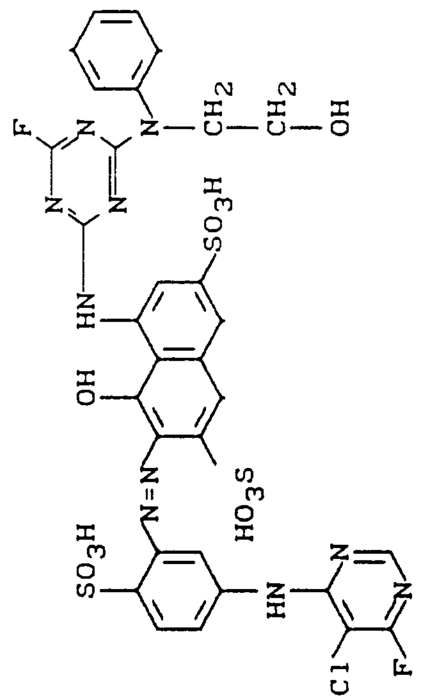

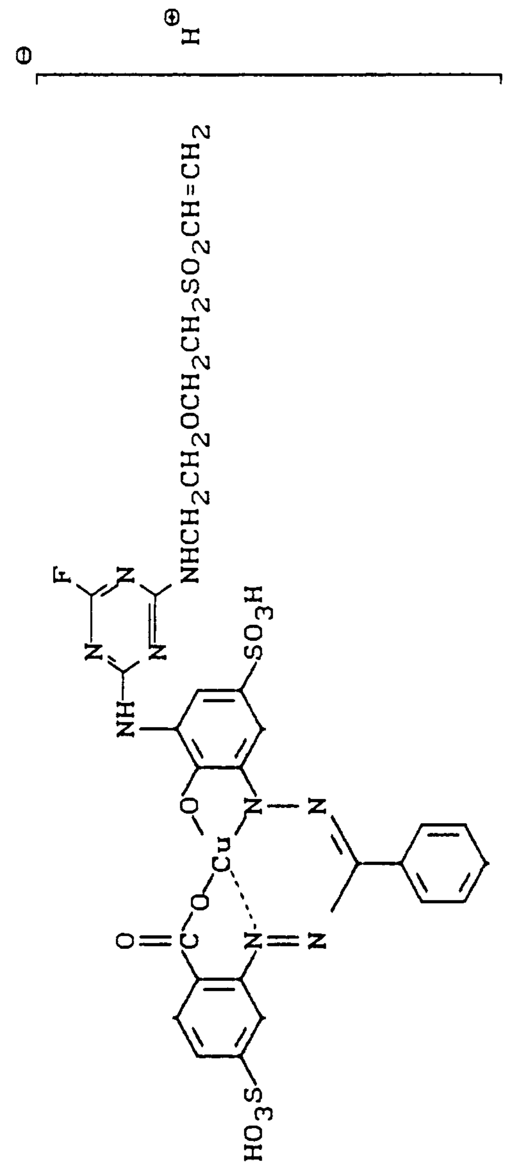

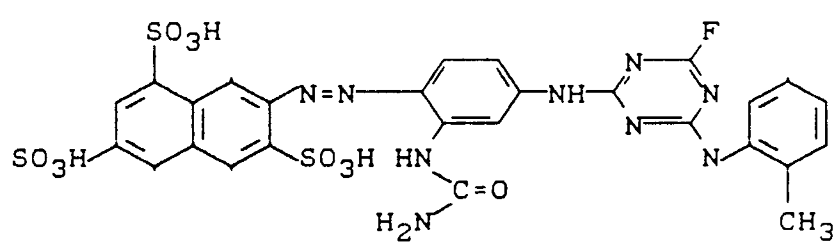

Anstelle der Farbstoffe mit einer Gruppe $-SO_2CH=CH_2$ können auch die entsprechenden Farbstoffe mit der Gruppe $-SO_2CH_2CH_2OSO_3H$ bzw. $-SO_2CH_2CH_2Cl$ eingesetzt werden.

**Patentansprüche**

1. Präparationen wasserlöslicher Reaktivfarbstoffe, dadurch gekennzeichnet, daß sie Pyridinderivate der Formel

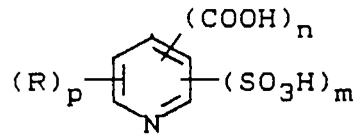 (I)

worin

n, m = 0, 1 oder 2 und n + m = 1-3

p = 0 oder 1

R = $C_1$-$C_4$-Alkyl

oder deren Salze enthalten.

**2.** Präparationen gemäß Anspruch 1 enthaltend Farbstoffe mit mindestens einem Mono- oder Dihalogen-sym.-triazinylrest, Mono-, Di- oder Trihalogenpyrimidinylrest oder Rest $-SO_2CH_2CH_2X$ mit X = anionisch abspaltbarer Rest, insbesondere -Cl oder $-OSO_3H$.

**3.** Präparationen gemäß wenigstens einem der vorhergehenden Ansprüche, enthaltend Farbstoffe mit mindestens einem Reaktivrest

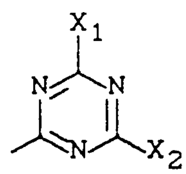

oder

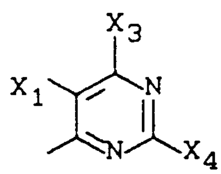

oder

$-SO_2-CH_2-CH_2-OSO_3H$

mit

$X_1$ = Cl, F

$X_2$ = Cl, F, $NH_2$, NHR', OR', $CH_2R'$, SR', NR'R"

$X_3$ = Cl, F, $CH_3$

$X_4$ = H, Cl, F

worin R' und R" unabhängig voneinander Wasserstoff, $C_{1-4}$-Alkyl, das gegebenenfalls substituiert ist, Phenyl, das gegebenenfalls substituiert ist, oder Naphthyl, das gegebenenfalls substituiert ist, bedeuten oder worin R' und R" zusammen mit dem Aminostickstoffatom einen Morpholino-, Piperidino- oder Piperazinorest bilden.

**4.** Präparationen nach wenigstens einem der vorhergehenden Ansprüche, dadurch gekennzeichnet, daß R' und R" unabhängig voneinander bedeuten:

Wasserstoff

$C_{1-4}$-Alkyl substituiert durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $CH=CH_2$ oder $-CH_2CH_2-V$ mit V = alkalisch eliminierbarer Rest);

Phenyl substituiert durch Halogen, Nitro, Cyan, Trifluormethyl, Sulfamoyl, Carbamoyl, $C_{1-4}$-Alkyl, $C_{1-4}$-Alkanoylamino, Benzoylamino, Ureido, Hydroxy, Carboxy, Sulfomethyl oder Sulfo

oder Naphthyl substituiert durch Halogen, Nitro, $C_{1-4}$-Alkoxy, $C_{1-4}$-Alkanoylamino, Hydroxy, Carboxy oder Sulfo.

**5.** Präparationen gemäß wenigstens einem der vorhergehenden Ansprüche, dadurch gekennzeichnet, daß das Pyridinderivat (I) Nicotinsäure, iso-Nicotinsäure, Pyridin-3-sulfonsäure, Pyridin-2,3-dicarbonsäure, Pyridin-2,5-dicarbonsäure, 2-Carboxy-5-methylpyridin oder 4-Methylpyridin-3-sulfonsäure ist.

**6.** Feste Präparationen gemäß Anspruch 1, enthaltend 10 - 95 Gew.-% Farbstoff
0,01 - 20 Gew.-% (I)
0 - 90 Gew.-% übliche Einstellmittel.

**7.** Flüssige Präparationen gemäß Anspruch 1, enthaltend
10 - 30 Gew.-% Farbstoff
0,1 - 10 Gew.-% (I)
0 - 60 Gew.-% wassermischbares Lösungsmittel
0,1 - 5 Gew.-% Puffer
90 - 20 Gew.-% Wasser.

**8.** Verfahren zum Färben und Bedrucken von hydroxylgruppenhaltigen oder amidgruppenhaltigen Materialien mit Farbstoff-Präparationen, dadurch gekennzeichnet, daß eine Präparation gemäß wenigstens einem der vorhergehenden Ansprüche verwendet wird.

**Claims**

**1.** Preparations of water-soluble reactive dyestuffs, characterized in that they contain pyridine derivatives of the formula

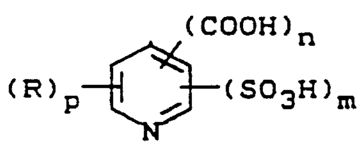

(I)

in which
n, m are 0, 1 or 2 and n + m is 1-3
p is 0 or 1
R is $C_1$-$C_4$-alkyl
or salts thereof.

**2.** Preparations according to Claim 1 containing dyestuffs having at least one mono- or dihalogeno-sym.-triazinyl radical, mono-, di- or trihalogenopyrimidinyl radical or a $-SO_2CH_2CH_2X$ radical where X is a radical which can be eliminated as an anion, in particular -Cl or $-OSO_3H$.

**3.** Preparations according to at least one of the preceding claims, containing dyestuffs having at least one reactive radical

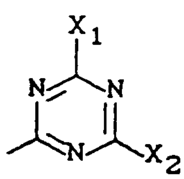

or

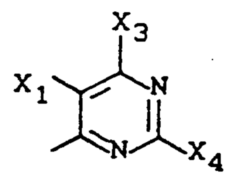

or

$-SO_2-CH_2-CH_2-OSO_3H$

where
$X_1$ is Cl, F
$X_2$ is Cl, F, $NH_2$, NHR', OR', $CH_2R'$, SR', NR'R"
$X_3$ is Cl, F, $CH_3$
$X_4$ is H, Cl, F,
in which R' and R", independently of one another, denote hydrogen, $C_{1-4}$-alkyl, which is substituted or unsubstituted, phenyl which is substituted or unsubstituted, or naphthyl which is substituted or unsubstituted,
or in which R' and R", together with the amino nitrogen atom, form a morpholino, piperidino or piperazino radical.

**4.** Preparations according to at least one of the preceding claims, characterized in that R' and R", independently of one another denote:
hydrogen
$C_{1-4}$alkyl-substituted by halogen, cyano, $C_{1-4}$-alkoxy, hydroxyl, carboxyl, sulpho or sulphato, benzyl, phenethyl, cyclohexyl, phenyl or $-NHCH_2CH_2OCH_2CH_2-SO_2M$ (M = $CH=CH_2$ or $-CH_2CH_2-V$ where V is a radical which can be eliminated by alkali);
phenyl substituted by halogen, nitro, cyano, trifluoromethyl, sulphamoyl, carbamoyl, $C_{1-4}$-alkyl, $C_{1-4}$-alkanoylamino, benzoylamino, ureido, hydroxyl, carboxyl, sulphomethyl or sulpho,
or naphthyl substituted by halogen, nitro, $C_{1-4}$-alkoxy, $C_{1-4}$-alkanoylamino, hydroxyl, carboxyl or sulpho.

**5.** Preparations according to at least one of the preceding claims, characterized in that the pyridine derivative (I) is nicotinic acid, isonicotinic acid, pyridine-3-sulphonic acid, pyridine-2,3-dicarboxylic acid, pyridine-2,5-dicarboxylic acid, 2-carboxy-5-methylpyridine or 4-methylpyridine-3-sulphonic acid.

**6.** Solid preparations according to Claim 1, containing
10 - 95% by weight of dyestuff
0.01 - 20% by weight of (I)
0 - 90% by weight of conventional standardizing agents.

**7.** Liquid preparations according to Claim 1, containing
10 - 30% by weight of dyestuff
0.1 - 10% by weight of (I)
0 - 60% by weight of water-miscible solvent
0.1 - 5% by weight of buffer
90 - 20% by weight of water.

**8.** Process for the dyeing and printing of hydroxyl- or amido-containing materials with dyestuff preparations, characterized in that a preparation according to at least one of the preceding claims is used.

**Revendications**

**1.** Compositions de colorants réactifs solubles dans l'eau, caractérisées en ce qu'elles contiennent des dérivés de la pyridine de formule

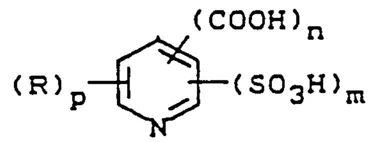

(I)

dans laquelle
n, m = 0, 1 ou 2, et n + m = 1 à 3,
p = 0 ou 1
R = alkyle en $C_1$-$C_4$,
ou leurs sels.

**2.** Compositions selon la revendication 1, contenant des colorants qui contiennent au moins un radical mono- ou di-halogéno-sym-triazinyle, ou un groupe mono-, di- ou tri-halogénopyridimidinyle ou le groupe $-SO_2CH_2CH_2X$ dans lequel X = substituant anionique éliminable, en particulier -Cl ou $-OSO_3H$.

**3.** Compositions selon au moins une des revendications précédentes, contenant des colorants portant au moins un groupe réactif

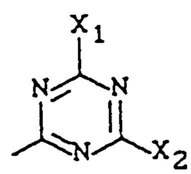

ou

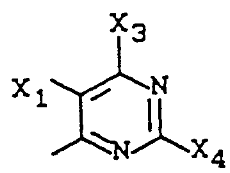

ou

$-SO_2-CH_2-CH_2-OSO_3H$

dans lesquels
$X_1$ = Cl, F
$X_2$ = Cl, F, $NH_2$, NHR', OR', $CH_2R'$, SR', NR'R''
$X_3$ = Cl, F, $CH_3$ $X_4$ = H, Cl, F
et
R' et R'' représentent chacun, indépendamment l'un de l'autre, l'hydrogène, un groupe alkyle en $C_1$-$C_4$ éventuellement substitué, un groupe phényle éventuellement substitué ou un groupe naphtyle éventuellement substitué, ou bien R' et R'' forment ensemble et avec l'atome d'azote du groupe amino un radical morpholino, pipéridino ou pipérazino.

**4.** Compositions selon au moins une des revendications précédentes, caractérisées en ce que R' et R'' représentent chacun, indépendamment l'un de l'autre :
l'hydrogène,
un groupe alkyle en $C_1$-$C_4$ substitué par des halogènes, des groupes cyano, alcoxy en $C_1$-$C_4$, hydroxy, carboxy, sulfo ou sulfato, benzyle, phénéthyle, cyclohexyle, phényle ou $-NHCH_2CH_2OCH_2CH_2-SO_2M$ (M = $CH=CH_2$ ou $-CH_2CH_2-V$ avec V = substituant éliminable en milieu alcalin);
un groupe phényle substitué par des halogènes, des groupes nitro, cyano, trifluorométhyle,

sulfamoyle, carbamoyle, alkyle en $C_1$-$C_4$, alcanoylamino en $C_1$-$C_4$, benzoylamino, uréido, hydroxy, carboxy, sulfoéthyle ou sulfo,

ou un groupe naphtyle substitué par des halogènes, des groupes nitro, alcoxy en $C_1$-$C_4$, alcanoylamino en $C_1$-$C_4$, hydroxy, carboxy ou sulfo.

**5.** Compositions selon au moins une des revendications précédentes, caractérisées en ce que le dérivé de la pyridine (I) est l'acide nicotinique, l'acide isonicotinique, l'acide pyridine-3-sulfonique, l'acide pyridine-2,3-dicarboxylique, l'acide pyridine-2,5-dicarboxylique, la 2-carboxy-5-méthylpyridine ou l'acide 4-méthylpyridine-3-sulfonique.

**6.** Compositions solides selon la revendication 1, contenant :
10 à 95 % en poids de colorant,
0,01 à 20 % en poids de (I),
0 à 90 % en poids de diluants usuels.

**7.** Compositions liquides selon la revendication 1, contenant :
10 à 30 % en poids de colorant,
0,1 à 10 % en poids de (I),
0 à 60 % en poids d'un solvant miscible à l'eau,
0,1 à 5 % en poids de tampons,
90 à 20 % en poids d'eau.

**8.** Procédé pour la teinture et l'impression de matières contenant des groupes hydroxy ou des groupes amides par des compositions de colorant, caractérisé en ce que l'on utilise une composition selon au moins une des revendications précédentes.